# EUROPEAN PATENT SPECIFICATION

(11) **EP 0 626 049 B1**
(45) Date of publication and mention of the grant of the patent: **02.05.1997**
(21) Application number: 93903863.4
(22) Date of filing: 08.02.1993
(51) Int. Cl.: F16K 7/17, F16K 31/08, A01J 5/14

(54) **A PILOT DIAPHRAGM VALVE**
EIN PILOT DIAPHRAGMA-VENTIL
VANNE PILOTE A DIAPHRAGME

(30) Priority: 10.02.1992 DK 160/92
(43) Date of publication of application: 30.11.1994
(73) Proprietor: AKTIESELSKABET S.A. CHRISTENSEN & CO., DK-6000 Kolding (DK)
(72) Inventor: LINDHOLST, Torben, K., DK-6000 Kolding (DK)
(74) Representative: Larsen, Anna
(86) International application number: DK9300044
(87) International publication number: WO9316309

(56) References cited:
- GB-A- 2 095 528
- GB-A- 2 103 391

## Description

### Technical Field

The present invention relates to a pilot diaphragm valve, particularly for a pulsator, comprising a piston diaphragm valve of the type stated in the preamble to claim 1 for a milking plant

### Background Art

Such valves are known from GB-A-2 095 528. The position of the valve members are controlled by electromagnets. At the use of such valve it is essential to minimize the power consumption of the electromagnets.

### Disclosure of the Invention

According to the invention a pilot diaphragm valve is provided, in particular for a pulsator comprising a piston diaphragm valve, wherein the position of a piston is determined by the pressure on a diaphragm and wherein a diaphragm chamber on one side of the diaphragm is connected to the chamber of a pilot valve by means of an air conduct, said pilot chamber having a first and a second inlet with a first and second pressure, respectively, and wherein a movable valve member is arranged for alternately closing the first and second inlet, said valve furthei comprising a cylinder provided with a coil form having a coil adapted to be connected to an electronic circuit being able to supply said coil with current pulses, the direction of which may alternate at a predetermined frequency and wherein all of the valve members are made of an essentially non-magnetic material such as plastics.

The valve is characterised in that a toggle arm is tiltably arranged in or adjacent a wall of the pilot valve chamber, one end of said toggle arm forming the movable valve member and the other end protruding out through the wall and engaging a displaceable slider comprising a plurality of permanent magnets mounted in a series, wherein two magnetics poles of the same type face each other, said slider arranged so as to slide in the cylinder. As the magnetic core comprises permanent magnets being mounted with opposite polarity, the tractive effort curve of the magnetic core is a relatively flat curve in the entire area of motion. By using a toggle arm it is possible to incorporate a gearing in the system. A considerable advantage of the new construction is that the sliders carrying the permanent magnets may be displaced by supplying the colis with relatively weak current pulses, whereby the power consumption (the current pulses through the coil) is considerably smaller than at known systems.

In a perferred embodiment of the invention three magnets are arranged in the cylinder, the two upper magnets having poles of the same type facing each other through an intermediate layer of a non-magnetic material, and the two lower magnets having their poles in the same direction thus forming a rod magnet having a single north pole at one end and a single south pole at the other end.

Two iron rings are preferably mounted about the cylinder, one on each side of the coil. The iron rings lock the magnetic core in its outermost positions. When an electric current pulse has guided the slider with the magnets into an outermost position, the slider is retained in this outermost position without additional electric power due to the force of attraction between the magnet and the adjacent iron ring in said outermost position. As a result, a current operated valve having a very small power consumption is obtained.

In a preferred embodiment of the invention the valve has a power consumption of approximately 0.01 watt, which is approximately 200 times less than other hitherto known low energy valves.

### Brief Description of the Drawings

The invention is described in greater detail in the following with examples and with reference to the accompanying drawings, in which
Fig. 1 is an elevational, cross-sectional view of an example of an embodiment of a pilot diaphragm valve according to the invention, in a first position,
Fig. 2 the same as Fig. 1 in a second positon.

### Best Mode for carrying out the invention

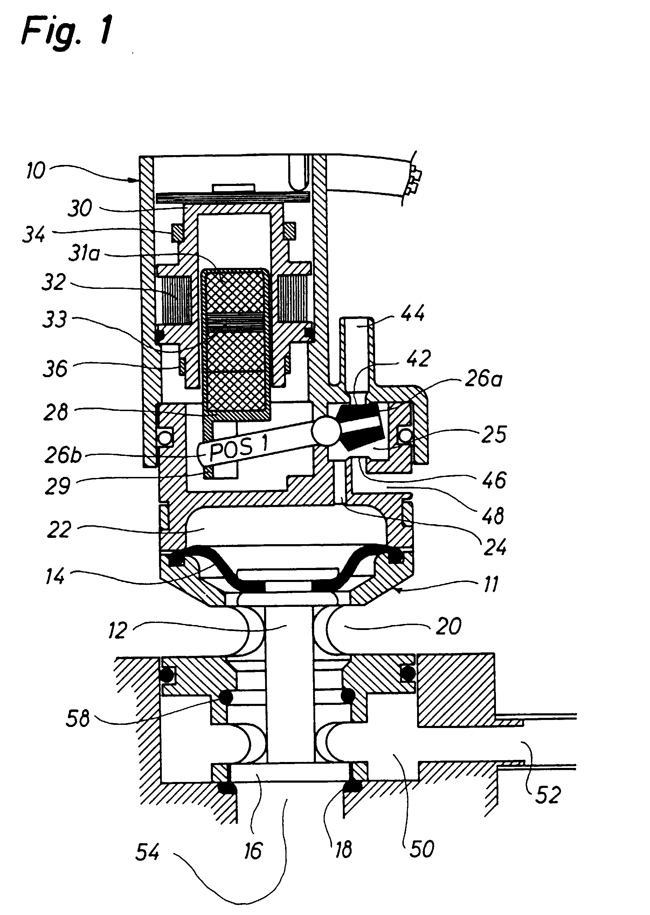

Fig. 1 illustrates a preferred embodiment of a pilot diaphragm valve (10), essentially being made of plastics and forming part of an electronic pulsator for a milking plant. The diaphragm valve is viewed in section on the lower portion of Fig. 1. A piston (12) is attached to a diaphragm (14), which may be made of rubber. In the bottom position, referred to as position 1 in Fig. 1, a piston member (16) sealingly abuts a gasket (18) at the bottom of a valve chamber. A channel (54) under a continuous vacuum is provided underneath the piston member (16).

A circumferential chamber (50) is provided above the piston member (16), said chamber being connected to a channel (52) leading to the teat cup of the milking plant.

In the bottom position the chamber (50) communicates with a second circumferential chamber (20) with connection to a chamber or channel having a constant pressure of approximate 1 atmosphere. The diaphragm (14) is able move upwards and downwards between position 1 and position 2 in a diaphragm chamber (22). An air conduct is provided at (24), said conduct leading to a valve chamber (25) in a pilot valve (13). A toggle arm (26) is provided in a wall (if desired, a supporting wall adapted thereto) of the pilot valve, one end of the toggle arm being formed as a valve member (26a) and the other end (26b) being connected to a slider (28).

The slider (28) comprises a plurality of permanent magnets, three magnets illustrated in the example, positioned in such manner that the poles mentioned in an order from top to bottom are N-S,S-N,S-N. The magnets thus form two rod magnets having opposite S-poles and only separated by an intermediate layer of plastics or another non-magnetic material. The entire slider is preferably covered by a plastics casing thus holding the magnets together.

The slider (28) functions as a piston sliding inside a plastics cylinder, which at the same time forms a coil form retaining a coil (32), the windings of said coil being arranged approximately centrally about the cylinder (30). An iron ring (34) is provided about the cylinder above the coil and another iron ring (36) is mounted about the cylinder (30) below the coil.

One end of the toggle arm (26) communicates with the slider (28) in such manner that the toggle arm follows the upwards and downwards movement of the slider in the cylinder (30). In the shown embodiment the slider (28) is provided with an extension or projection (29) with a hole through which one end of the toggle arm (26) may protrude.

The coil (32) communicates with an electronic control circuit supllying an operative current through the coil. Depending on the direction of the current, the magnetic slider (28) is displaced upwards or downwards.

In position 1 shown in Fig. 1 the slider is retained by gravity and to some extent by forces between the magnets (31b, 31c) and the lowermost iron ring (36). As can be seen from Fig. 1 the left portion (26b) of the toggle arm is pressed downwards into position 1 and the right, short portion (26a) (extending into the pilot diaphragm valve chamber (25), into which the air conduct (24) opens) is pressed upwards and covers the opening (42) leading into a channel (44) under continuous vacuum.

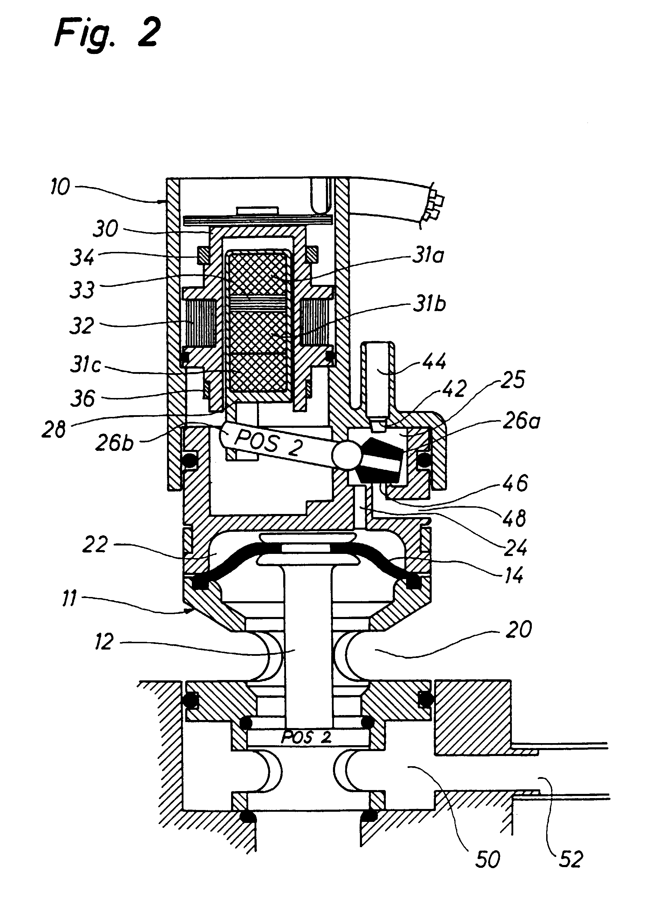

When a short current pulse is passed through the coil (32), a force arises between the coil (32) and the magnetic core (31) overcoming the mentioned retaining force? (gravity and any forces between the magnets (31bc and the adjacent iron ring (36)) and setting the slider into motion towards the second position, position 2 of Fig. 2. The slider is then retained in this position by means of a force between the uppermost iron ring (34) and the uppermost magnet (31a) and by a force between the lowermost iron ring (36) and the lowermost pole in the magnet (31c).

As a result, a retaining force is obtained in position 2 of Fig. 2, said force being sufficiently strong to force the valve member (26a) to close and air inlet (46) to an air conduct (48) having approximately 1 atmosphere, when the valve chamber (25), the air conduct (24) and the diaphragm chamber (22) are under vacuum.

At the next opposite current pulse, the slider is detached from position 2 and set into downward motion towards position 1, at which position it is retained by gravity and the forces between the lowermost iron ring (36) and the lowermost magnets (31bc), until the subsequent current pulse.

When the magnets are pressed up into the upper position, the left portion (26b) of the toggle arm is lifted into position 2 and the right portion (26a) tilts downwards and closes an opening (46) leading to a channel (48) having a constant atmospheric air pressure.

At the same time the opening (42) to the channel (44) under constant vacuum is opened. Vacuum is passed through the air conduct (24) to the diaphragm chamber (22) and the diaphragm is pressed into position 2. The piston (12) follows said diaphragm and the piston member (16) is lifted to sealingly abut a gasket (58) and the chamber (20). In this upper position the vacuum channel (54) communicates with the chamber (50) and the channel (52) leading to the teat cup.

The structure of the pilot valve is characterised in that the magnetic core (31) comprises permanent magnets provided with opposite polarity effecting that the tractive force curve of the magnetic core is relatively flat in the entire area of motion.

The two stationary iron rings (34,36) lock the magnetic core in the outermost position, whereby the valve may be operated by means of short current pulses with a consequently low energy consumption.

Due to the two opposite magnets in the coil core (31), the magnetic core (31) functions under essentially the same tractive force over a relatively long section, that is to say approximately 3 mm.

Moreover, as a result thereof, the core may be locked in one or both outermost positions, whereby the core may used to operate the toggle arm system (26a,26b) with a built-in gearing, for instance in the area of approximately 1:2 to approximately 1:4. The toggle arm system is provided with the valve member (26a) which opens and closes the two air conducts (44,48), respectively. The constant force, which is to close the air conduct, is provided by means of the magnet/iron ring (34,36) without supply of additional energy.

The shown construction is advantageous in that only a very small and short operative current is required to magnetise the coil into a displacement of the slider and thus of the toggle arm, whereby the valve position changes from position 1 to position 2 or visa versa.

In the above described embodiment the valve acts as a bistable pulse valve.

By altering the position of the iron ring, the valve may be changed to a monostable constant current valve to form part of other operative systems. The energy consumption, however, then increases to approximately 0.1 watt at this type of valve.

The present invention may be employed in other ways than illustrated on the accompanying drawings, which are represent merely examples of use. The number and type of the used permanent magnets may thus vary, just as the specific form of the valve members and the valve chambers may be altered, if needed. The valve of the above embodiment is provided with a vertical, displaceable slider closing the vacuum channel in position 1. In a alternative embodiment the valve may be rotated 180° or the vacuum inlet and the air inlet may be interchanged so that gravity (due to the weight of the magnets) contributes to pressing the pilot valve member against the air conduct. In this embodiment it may be advantageous to arrange an additional iron ring subjacent to the ring (36) for retaining the slider in position 1. The actual size and placing of the iron rings (34,26) should be chosen with regard to obtaining and maintaining the desired outermost positions.

## Claims

1. A pilot diaphragm valve (10), particularly for a pulsator, comprising a piston diaphragm valve (11), wherein the position of a piston (12) is determined by the pressure on a diaphragm (14) and wherein a diaphragm chamber (22a) on one side of the diaphragm communicates with the pilot valve chamber (25) of a pilot valve (13) by means of an air conduct (24), said pilot chamber (25) having a first and a second inlet (42,46) with a first and second pressure, respectively, and wherein a movable valve member (26a) is arranged for alternately closing the first and second inlet (42,46), and said valve further comprising a cylinder (30) provided with a coil form having a coil adapted to be connected to an electronic circuit being able to supply said coil with current pulses, the direction of which may alternate at a predetermined frequency and wherein all of the valve members are made of an essentially non-magnetic material such as plastics, **characterised** in that a toggle arm (26) is tiltably arranged in or adjacent a wall of the pilot valve chamber (25), one end of said toggle arm forming the movable valve member (26a) and the other end (26b) protruding out through the wall and engaging a displaceable slider (28) comprising a plurality of permanent magnets (31) mounted in a series, wherein two magnetics poles of the same type face each other, said slider (28) arranged so as to slide in the cylinder (30).

2. A pilot diaphragm valve as claimed in claim 1, **characterised** in that three magnets (31a, 31b, 31c) are arranged in the cylinder, the two upper magnets (31a, 31b) having poles of the same type facing each other through an intermediate layer (33) of a non-magnetic material, and the two lower magnets (31b, 31c) having their poles in the same direction thus forming a rod magnet having a single north pole at one end and a single south pole at the other end.

3. A pilot diaphragm valve as claimed in claim 2, **characterised** in that at least one stationary iron ring is provided on outer face of the cylinder (30) for locking the magnetic core in at least one outermost position.

4. A pilot diaphragm valve as claimed in claims 1, 2 or 3, **characterised** in that at least two stationary iron rings (34,36) are provided on the outer face of the cylinder (30) for locking the magnetic core in two outermost positions.

5. A pilot diaphragm valve as claimed in one or more of the claims 1 to 4, **characterised** in that the toggle arm (26) is adapted to provide a built-in gearing, preferably a gearing on approximately from 1:2 to approximately 1:4.

6. A pilot diaphragm valve according to one or more of the claims 1 to 5, **characterised** in that two stationary iron rings are arranged so as to attract one end of each of the magnets of the slider in one of the outermost positions.

## Patentansprüche

1. Ein Steuerungsmembranventil (10), besonders für einen Pulsator, mit einem Kolbenmembranventil (11), worin die Lage eines Kolbens (12) durch den Druck auf eine Membran (14) bestimmt ist und worin eine Membrankammer (22a) auf einer Seite der Membran mittels einer Luftleitung (24) mit der Steuerungsventilkammer (25) eines Steuerungsventils (13) in Verbindung steht, die Steuerungskammer (25) einen ersten und einen zweiten Einlaß (42, 46) bzw. einen ersten und zweiten Druck hat, und worin ein bewegliches Ventilteil (26a) für abwechselndes Schließen des ersten und zweiten Einlasses (42, 46) angeordnet ist, und das Ventil weiterhin einen Zylinder (30) hat, der mit einem Spulenkörper mit einer Spule versehen ist, die angepaßt ist, mit einer elektronischen Schaltung verbunden zu werden, die die Spule mit Strompulsen versorgen kann, deren Richtung mit einer vorbestimmten Frequenz abwechseln kann, und worin alle Ventilteile aus einem im wesentlichen nicht magnetischen Werkstoff wie zum Beispiel Kunststoff hergestellt sind, dadurch gekennzeichnet, daß ein Schalthebel (26) kippbar in oder neben einer Wand der Steuerungsventilkammer (25) angebracht ist, wobei ein Ende des Schalthebels das bewegliche Ventilteil (26a) bildet und das andere Ende (26b) durch die Wand hinausragt, wo es mit einem beweglichen Schieber (28) in Eingriff steht, der eine Anzahl von Permanentmagneten (31) hat, die in einer Reihe angebracht sind, worin zwei magnetische Pole gleichen Typs nebeneinander liegen, wobei der Schieber (28) so angeordnet ist, daß er in dem Zylinder (30) gleitet.

2. Ein Steuerungsmembranventil nach Anspruch 1, dadurch gekennzeichnet, daß drei Magnete (31a, 31b, 31c) in dem Zylinder angeordnet sind, von denen die zwei oberen Magnete (31a, 31b) mit gleichen Polen durch eine Zwischenschicht (33) aus nicht magnetischem Werkstoff einander zugewandt sind und die zwei unteren Magnete (31b, 31c) mit ihren Polen in derselben Richtung, so daß sie einen Stabmagneten bilden mit einem einzelnen Nordpol an einem Ende und einem einzelnen Südpol an dem anderen Ende.

3. Ein Steuerungsmembranventil nach Anspruch 2, dadurch gekennzeichnet, daß wenigstens ein stationärer Eisenring an der äußeren Fläche des Zylinders (30) angebracht ist, um den magnetischen Kern in wenigstens einer äußersten Position festzuhalten.

4. Ein Steuerungsmembranventil nach Ansprüchen 1, 2 oder 3, dadurch gekennzeichnet, daß wenigstens zwei stationäre Eisenringe (34, 36) an der äußeren Fläche des Zylinders (30) angebracht sind, um den magnetischen Kern in den beiden äußersten Positionen festzuhalten.

5. Ein Steuerungsmembranventil nach einem oder mehreren der Ansprüche 1 bis 4, dadurch gekennzeichnet, daß der Schalthebel (26) so angebracht ist, daß eine eingebaute Übersetzung vorzugsweise zwischen ungefähr 1:2 und ungefähr 1:4 entsteht.

6. Ein Steuerungsmembranventil nach einem oder mehreren der Ansprüche 1 bis 5, dadurch gekennzeichnet, daß zwei stationäre Eisenringe so angebracht sind, daß ein Ende jedes der Magnete des Schiebers in einer der äußersten Positionen angezogen wird.

## Revendications

1. Vanne pilote à membrane (10), en particulier pour un générateur de pulsations, comprenant une soupape à membrane et piston (11), dans laquelle la position d'un piston (12) est déterminée par la pression s'exerçant sur une membrane (14) et dans laquelle une chambre à membrane (22), située d'un côté de la membrane, communique avec la chambre de soupape pilote (25) d'une soupape pilote (13) au moyen d'un conduit à air (24), ladite chambre de soupape pilote (25) présentant une première et une seconde entrée (42, 46), respectivement à une première pression et à une seconde pression, un élément mobile de soupape (26a) étant positionné pour fermer en alternance la première entrée et la seconde entrée (42, 46), et ladite vanne comprenant, en outre, un cylindre (30) pourvu d'une structure à bobine comportant une bobine conçue pour être reliée à un circuit électronique apte à fournir à ladite bobine des impulsions de courant, dont le sens peut changer périodiquement à une fréquence prédéterminée, tous les éléments de soupape étant réalisés en un matériau essentiellement amagnétique, tel qu'une matière plastique, caractérisée en ce qu'un levier basculant (26) est positionné, avec une liberté de basculement, dans ou à proximité immédiate d'une paroi de la chambre de soupape pilote (25), une extrémité dudit levier basculant constituant l'élément mobile de soupape (26a) et l'autre extrémité (26b) faisant saillie à travers la paroi, vers l'extérieur de celle-ci, et venant en prise avec un coulisseau translatable (28) qui comprend plusieurs aimants permanents (31) montés en une succession, dans laquelle deux pôles magnétiques du même type se font face l'un l'autre, ledit coulisseau (28) étant disposé de façon à pouvoir coulisser dans le cylindre (30).

2. Vanne pilote à membrane selon la revendication 1, caractérisée en ce que trois aimants (31a, 31b, 31c) sont disposés dans le cylindre, les deux aimants supérieurs (31a, 31b) ayant des pôles du même type qui se font face l'un l'autre au travers d'une couche intermédiaire (33) en un matériau amagnétique, et les deux aimants inférieurs (31b, 31c) ayant leurs pôles dans la même direction, formant ainsi un barreau d'aimant ayant un pôle nord unique, à une extrémité, et un pôle sud unique, à l'autre extrémité.

3. Vanne pilote à membrane selon la revendication 2, caractérisée en ce qu'au moins une bague de fer fixe est prévue sur la face extérieure du cylindre (30) pour bloquer le noyau magnétique dans au moins une position extrême.

4. Vanne pilote à membrane selon les revendications 1, 2 ou 3, caractérisée en ce qu'au moins deux bagues de fer fixes (34, 36) sont prévues sur la face extérieure du cylindre (30), pour bloquer le noyau magnétique dans deux positions extrêmes.

5. Vanne pilote à membrane selon une ou plusieurs des revendications 1 à 4, caractérisée en ce que le levier basculant (26) est conçu pour fournir un rapport multiplicateur intégré, de préférence un rapport multiplicateur d'environ 1:2 à environ 1:4.

6. Vanne pilote à membrane selon une ou plusieurs des revendications 1 à 5, caractérisée en ce que deux bagues de fer fixes sont disposées de façon à attirer une extrémité de chacun des aimants du coulisseau dans l'une des positions extrêmes.
